# EUROPEAN PATENT APPLICATION

(11) **EP 4 470 394 A1**
(43) Date of publication of application: **04.12.2024**
(21) Application number: 23759214.2
(22) Date of filing: 22.02.2023
(51) Int. Cl.: A24B 3/16, A24C 5/01

(54) **METHOD FOR ORDERING DISORDERED TOBACCO SHREDS OF HEATING CIGARETTES**

(30) Priority: 22.02.2022 CN 202210163955
(71) Applicant: Sichuan Sanlian New Material Co., Ltd., Sichuan 610041 (CN); China Tobacco Sichuan Industrial Co., Ltd., Chengdu, Sichuan 610000 (CN)
(72) Inventor: GUO, Linqing, Chengdu, Sichuan 610000 (CN); HUANG, Yuchuan, Chengdu, Sichuan 610000 (CN); LIU, Kai, Chengdu, Sichuan 610000 (CN); LIANG, Kun, Chengdu, Sichuan 610000 (CN); WANG, Shuaipeng, Chengdu, Sichuan 610000 (CN); SHI, Jianyang, Chengdu, Sichuan 610000 (CN); CHEN, Yexian, Chengdu, Sichuan 610000 (CN); ZHOU, Rong, Chengdu, Sichuan 610000 (CN); HUANG, Xiang, Chengdu, Sichuan 610000 (CN); HAN, Jing, Chengdu, Sichuan 610000 (CN); LU, Ye, Chengdu, Sichuan 610000 (CN)
(74) Representative: Isern Patentes y Marcas S.L.
(86) International application number: PCT/CN2023/077728
(87) International publication number: WO 2023/160590

(57) **Abstract**

A method for ordering disordered tobacco shreds of heating cigarettes. The method comprises: step 100: determining the composition of a tobacco combination for disordered tobacco shreds; step 200: cutting the tobacco combination for disordered tobacco shreds to preset dimensions; and step 300: rolling the obtained tobacco combination for disordered tobacco shreds to form a base rod of the smoke-producing section. The heated cigarette prepared by the method is better in terms of plumpness and uniformity, not only can be compatible with a needle-type aerosol generating device, but can also be better compatible with a sheet-type aerosol generating device, such that the heated cigarette has a good versatility. This approach mitigates the market challenges associated with disorderly-arranged type heated cigarettes, and more effectively meets consumer demands.

## Description

### Technical Field

The invention relates to the technical field of heated cigarettes, and in particular to a method for ordering disordered tobacco shreds of heated cigarettes.

### Background Art

In the current context, cigarettes may be categorized into two main types: traditional cigarettes and heated cigarettes, with significant differences between them. The traditional cigarette technology is quite advanced, in which the tobacco raw materials are primarily processed by shredding, rolling and packaging. The tobacco shreds used in traditional cigarettes does not have special requirements. The tobacco shreds are irregular and disordered within the smoke-producing section, which is the primary functional structural component configured for aerosol generation. The smoking method for traditional cigarettes involve ignition and inhalation, with temperatures that can reach up to 900°C.

As a novel category of tobacco products, heated cigarettes differ from traditional cigarettes in terms of both the structure and the smoking method. They typically feature a multi-component composite structure, such as configurations like "2+2", "1+3", or "4+1". These structures are designed to operate in conjunction with a specific aerosol-generating device, and the heated cigarettes are heated for inhalation. The temperature of the heated cigarettes during inhalation is significantly lower than that of traditional cigarettes, and generally ranges from 300°C to 500°C. In addition, the heated cigarettes may be categorized into two types: orderly-arranged type heated cigarettes and disorderly-arranged type heated cigarettes. The orderly-arranged type heated cigarette mainly comprises a smoke-producing section which is the primary functional structural component configured for aerosol or smoke generation, and the tobacco shreds in the smoke-producing section are arranged orderly and regularly in a longitudinal direction. The rolling process for the smoke-producing sections is unique, a base rod of the smoke-producing section is produced by utilizing an improved filter rod forming technology. Other components are generally made by the improved filter rod forming technology. The cigarette rolling process for the heated cigarettes is similar to that for traditional cigarettes, and the overall production process is complex.

The tobacco shreds in the smoke-producing section of the disorderly-arranged type heated cigarette are arranged disorderly and irregularly. The preparation process of the smoke-producing sections of the disorderly-arranged type heated cigarettes is similar to that of traditional cigarettes, with the base rod being rolled by a cigarette making machine. Despite the use of an assembling machine for the preparation of heated cigarettes, the appearance and structure of the heated cigarettes diverge from those of traditional cigarettes. The internal tobacco shreds in the smoke-producing section are arranged in a disordered and irregular fashion by this method, and thus the smoke-producing section lacks the desired roundness, saturation, and uniformity. In addition, this irregular arrangement not only impacts the aesthetic appeal and suction experience but also fails to meet the requirements of the consumers who use sheet-type heating devices, thereby impeding the market promotion of these products.

### Summary

The purpose of the present invention is to provide a method for ordering disordered tobacco shreds of heated cigarettes, in order to solve the technical problems existing in the background art.

In order to achieve the above object, the present invention adopts the following technical solutions:
A method for ordering the disordered tobacco shreds of heated cigarettes, comprises:
step 100: determining the composition of a tobacco combination for disordered tobacco shreds;
step 200: cutting the tobacco combination for disordered tobacco shreds to preset dimensions; and
step 300: rolling the obtained tobacco combination for disordered tobacco shreds to form a base rod of a smoke-producing section.

In some embodiments, there further comprised between the step 200 and the step 300 is a step 202: controlling the moisture content of the tobacco combination for disordered tobacco shreds within a preset range.

In some embodiments, there further comprised between the step 200 and the step 300 is a step 204: controlling the stiffness and the anti-bending force for the tobacco combination for disordered tobacco shreds within preset ranges respectively.

In some embodiments, the tobacco combination for disordered tobacco shreds comprises reconstituted tobacco or a combination of reconstituted tobacco and tobacco raw material.

In some embodiments, the tobacco raw material comprises, but is not limited to, tobacco shreds, cut stems, expanded tobacco shreds, and expanded cut stems.

In some embodiments, the reconstituted tobacco comprises, but is not limited to, dry-process reconstituted tobacco, papermaking-process reconstituted tobacco, high-consistency pulping process reconstituted tobacco, and roll-pressed process reconstituted tobacco.

In some embodiments, the step of cutting the tobacco combination for disordered tobacco shreds to preset dimensions comprises: cutting the reconstituted tobacco to have a width ranging from 0.5 to 3 millimeters and a length ranging from 5 to 30 millimeters.

In some embodiments, the step of controlling the moisture content of the tobacco combination for disordered tobacco shreds within a preset range comprises: drying the reconstituted tobacco in such a way that the reconstituted tobacco has a moisture content of 9.0% or less, and the tobacco raw material has a moisture content of 12% or less.

In some embodiments, the step of controlling the stiffness and the anti-bending force for the tobacco combination for disordered tobacco shreds within preset ranges comprises: configuring the reconstituted tobacco to have a stiffness of 0.5mN*m or more, and an anti-bending force of 8.0mN or more.

In some embodiments, the step of rolling obtained tobacco combination for disordered tobacco shreds to form a base rod of a smoke-producing section, wherein: the desired filling degree of the base rod of the smoke-producing section in the rolling process is determined by the weight of the tobacco combination for disordered tobacco shreds filled in the smoke-producing sections at different volumes of the cigarette and the rigidity of the base rod of the smoke-producing section. The internal volume of the smoke-producing section of the cigarette is in a range of 300 to 1000mm³, and the weight of the tobacco combination for disordered tobacco shreds, filled in the smoke-producing sections having such internal volume, is in a range of 0.2 to 0.5 grams per cigarette, and the rigidity of the base rod of the smoke-producing section is in a range of 65% to 95%. Both the weight and rigidity are adjusted by an auxiliary control system of a cigarette making machine.

The possible beneficial effects of a method for ordering the disordered tobacco shreds of heated cigarettes disclosed in this application comprise, but are not limited to:
1. By employing this method, the base rod rolling process for the smoke-producing section of heated cigarettes ultimately achieves an ordered arrangement of the tobacco shreds that were initially disordered.
2. Based on the requirements for raw materials and rolling, the present invention can simply and efficiently enhance the production rate of ordered-type cigarettes.
3. The method provided by this invention is simple, user-friendly, and manageable for implementation.
4. By controlling the dimensions, moisture content, and stiffness of the raw materials, the method proposed by the present invention may be adapted to existing cigarette making apparatus or can accommodate existing cigarette making apparatus with minimal adjustments and costs. The method saves both time and financial investment required for equipment transformation, thereby being faster and more efficient.
5. The heated cigarettes produced by the method of this invention exhibit improved fullness and uniformity, are better compatible with sheet-based aerosol generation devices, thereby ensuring a good versatility. This approach mitigates the market challenges associated with disorderly-arranged type heated cigarettes, and more effectively meets consumer demands.

### Brief Description of the Drawings

Figure 1 is a schematic view of a cigarette obtained in Comparative Example 1.
Figure 2 is a schematic view of a cigarette obtained in Comparative Example 2.
Figure 3 is a schematic view showing an ordered state of a disordered-type cigarette.
Figure 4 is a schematic view of the end faces of the disordered-type cigarette samples.

### Detailed Description of the Embodiments

To further make the objectives, technical solutions, and benefits of the present invention clearer, further details will be provided below with reference to examples. It is important to note that the specific examples given are solely for illustrative purposes and do not limit the present application.

Conversely, the present application encompasses all alternatives, modifications, and equivalent methods and solutions that are within the spirit and scope of the invention as claimed. Additionally, to facilitate a better understanding of the invention by the public, some specific details are elaborated in the detailed description provided below. A person skilled in the art would be able to fully comprehend the present application without these detailed descriptions.

A method for ordering disordered tobacco shreds of heated cigarettes according to the embodiment of the present application will be described in detail below. Please note that the following examples are only used to explain the present application and do not limit the present application.

A method for ordering disordered tobacco shreds of heated cigarettes comprises:
step 100: determining the composition of a tobacco combination for disordered tobacco shreds. The tobacco combination comprises reconstituted tobacco or a combination of reconstituted tobacco and tobacco raw material.

The method comprises a step 200: cutting the tobacco combination for disordered tobacco shreds to preset dimensions. With regard to the selected reconstituted tobacco, the raw material characteristics thereof are controlled. The reconstituted tobacco is firstly cut into shreds having a fixed length and a fixed width. Generally, the reconstituted tobacco is cut into shreds having a length in a range of between 5 to 30mm, and a width in a range between 0.5 to 3mm.

The method comprises a step 300: rolling the obtained tobacco combination for disordered tobacco shreds to form a base rod of the smoke-producing section.

The ordering mainly refers to the regular arrangement of individual raw materials within the smoke-producing section of the cigarette. The individual raw materials are arranged in a longitudinal direction with respect to the cross section of the smoke-producing section of the cigarette, and some raw materials, each of which forms an angle between 30° to 120° with respect to the cross section, have a weight that is 50% of the weight of the raw materials within the smoke-producing section. In this case, it can achieve relative ordering.

The method mainly comprises: defining the compositions of the disordered tobacco shreds as well as defining each of the compositions of the disordered tobacco shreds based on at least one of the following four parameters: length with width, moisture content, stiffness and filling degree.

In some embodiments, there further comprised between the step 200 and the step 300 is a step 202: controlling the moisture content of the tobacco combination for disordered tobacco shreds within a preset range. The moisture content of the reconstituted tobacco raw materials in the blend is controlled by drying using conventional drying methods such as hot air drying and vacuum drying, and the moisture content of the reconstituted tobacco is controlled to 9.0% or less. The moisture content of the tobacco raw materials may be controlled to 12% or less.

In some embodiments, there further comprised between the step 200 and the step 300 is a step 204: controlling the stiffness and the anti-bending force of the tobacco combination for disordered tobacco shreds within preset ranges respectively. For the reconstituted tobacco raw materials in the blend, the reconstituted tobacco raw materials may be adjusted through a chemical composition adjustment or an auxiliary additive adjustment or a process improvement adjustment, in such a way that the reconstituted tobacco raw materials have a stiffness of 0.5mN*m or more and an anti-bending force of 8.0mN or more. The determination method refers to GB/T2679.3 "Determination of stiffness of paper and paperboard".

In some embodiments, the tobacco raw material comprises, but is not limited to, tobacco shreds, cut stems, expanded tobacco shreds, and expanded cut stems.

In some embodiments, the reconstituted tobacco comprises, but is not limited to, dry-process reconstituted tobacco, papermaking-process reconstituted tobacco, high-consistency pulping process reconstituted tobacco, and roll-pressed process reconstituted tobacco.

In some embodiments, the step of controlling the moisture content of the tobacco combination for disordered tobacco shreds within a preset range comprises: drying the reconstituted tobacco in such a way that the reconstituted tobacco has a moisture content of 9.0% or less, and the tobacco raw material has a moisture content of 12% or less.

In some embodiments, the step of controlling the stiffness and the anti-bending force of the tobacco combination for disordered tobacco shreds within preset ranges comprises: controlling the stiffness of the reconstituted tobacco to 0.5mN*m or more and controlling the anti-bending force to 8.0mN or more.

In some embodiments, in the step of rolling the obtained tobacco combination for disordered tobacco shreds to form a base rod of a smoke-producing section, wherein: the desired filling degree of the base rod of the smoke-producing section in the rolling process is determined by the weight of the tobacco combination for disordered tobacco shreds filled in the smoke-producing sections at different volumes of the cigarette and the rigidity of the base rod of the smoke-producing section. The internal volume of the smoke-producing section of the cigarette is in a range of 300 to 1000mm³, and the tobacco combination for disordered tobacco shreds, filled in the smoke-producing section having such internal volume, has a weight in a range of 0.2 to 0.5 grams per cigarette, and the rigidity of the base rod of the smoke-producing section is in a range of 65% to 95%. Both the weight and the rigidity are adjusted by an auxiliary control system of a cigarette making machine.

The disordered tobacco shreds may be consisted of one kind raw material or multiple kinds raw materials. One kind raw material specifically refers to the reconstituted tobacco raw material. The reconstituted tobacco raw material comprises, but is not limited to, a kind of reconstituted tobacco. The multiple kinds raw materials may comprise the reconstituted tobacco raw material and tobacco raw material. The reconstituted tobacco raw material comprises, but is not limited to, a kind of reconstituted tobacco. The tobacco raw material comprises, but is not limited to, any one selected from a group consisting of tobacco shreds, cut stems, expanded tobacco shreds, and expanded cut stems.

The ordering mainly refers to the regular arrangement of individual raw materials within the smoke-producing section of the cigarette. The individual raw materials are arranged in a longitudinal direction with respect to the cross section of the smoke-producing section of the cigarette, and some raw materials, each of which forms an angle between 30° to 120° with respect to the cross section, have a weight that is 50% of the weight of the raw materials within the smoke-producing section, it can achieve relative ordering.

Preferably, if the angle between the longitudinal arrangement of the individual raw material and the cross-section of the smoke-producing section of the cigarette is in the range of 80° to 100°, and the raw materials in such arrangement have a weight more than 60% of the weight of the raw materials inside the smoke-producing section, the relative ordering can be achieved.

More preferably, if the angle between longitudinal arrangement of the individual raw material and the cross-section of the smoke-producing section of the cigarette is in a range of 85° to 95°, and the raw materials in such arrangement have a weight more than 80% of the weight of the raw materials inside the smoke-producing section, a better relative ordering can be achieved.

The relative ordering means that the raw materials within the section are arranged longitudinally with respect to the cross section of the end of the cigarette, and some of the shreds raw materials are arranged regularly in the same direction.

The degree of ordering is greater than 50% (including 50%), and this range primarily depends on the properties of the raw materials. This range of the ordering degree may be defined based on at least one of the following: raw material compositions, raw material length and width, moisture content, stiffness, and filling degree.

The term "raw material compositions" specifically refers to the compositions of the tobacco combination, which is intended to obtain a more ordering result. The proportion of the reconstituted tobacco in the tobacco combination is proportional to the level of ordering achieved. Preferably, the relative orderliness ratio can be increased if the volume ratio of the reconstituted tobacco to the tobacco raw material is greater than 1:1. More preferably, the tobacco combination is exclusively composed of the reconstituted tobacco, thereby increasing the relative orderliness ratio.

The length and width of the tobacco combination for disordered tobacco shreds, i.e., the length and width of the raw material of disordered tobacco shreds, refer to the length and width of one kind of raw material. The length and width are defined in the shredding process, because the tobacco raw material itself cannot determine the length and width of the tobacco shreds after shredding. The shredding conditions specified in the context specifically refer to the requirement that the reconstituted tobacco raw materials in the used tobacco materials are cut into shreds having a fixed length and a fixed width. It requires that the width is set in the range of 0.5 to 3mm, and the length is set in the range of 5 to 30mm. Other kinds of tobacco raw materials can be processed according to the conventional cigarette shredding method.

Preferably, if the tobacco combination contains the reconstituted tobacco, the shredded length is defined to more than 10mm and the shredded width is defined to 0.5-2.5mm during the shredding process, which is conducive to a relative ordered arrangement.

More preferably, if the tobacco combination contains the reconstituted tobacco, the shredded length is defined to 12-20mm and the shredded width is defined to 0.8-1.5mm during the shredding process, which is more conducive to a relative ordered arrangement.

The shredded length can also be adjusted according to the track width of the cigarette making machine, so that the shredded length is equal to or greater than the track width. However, it is not limited to the track width and may be adjusted according to actual requirements.

The moisture content specifically refers to the water content of the reconstituted tobacco in the disordered tobacco shreds, and the moisture content is required to be 9.0% or less, and the moisture of the tobacco raw material is controlled to be 12% or less. Preferably, the moisture content of the reconstituted tobacco in the tobacco combination is controlled to be 6% or less. It is beneficial to the continuous rolling by the machine and a relative ordered arrangement. More preferably, the moisture content of the reconstituted tobacco in the tobacco combination is controlled to be 5% or less, which is more conducive to the continuous rolling by the machine and a relative ordered arrangement.

Regarding the stiffness of the disordered tobacco shreds, it mainly requires that the stiffness of the reconstituted tobacco is 0.5mN*m or more and the anti-bending force is 8.0mN or more. There are no limitations to the stiffness and the anti-bending force for the tobacco raw material. Preferably, the tobacco combination for disordered tobacco shreds contains the reconstituted tobacco which has a stiffness of 0.7mN*m or more and an anti-bending force of 15.0mN or more, it is conducive to realize the ordered arrangement. More preferably, the tobacco materials of the tobacco combination contain the reconstituted tobacco, which has a stiffness of 0.9mN*m or more and an anti-bending force of 19.0mN or more, it is more conducive to realize the ordered arrangement.

The filling degree of the smoke-producing section is determined by the weight of the internal raw materials within the smoke-producing sections at different volumes of the cigarette and the rigidity of the base rod of the smoke-producing section. The internal volume of the smoke-producing section of the cigarette may be in a range of 300 to 1000mm³. The internal raw materials within such volume range may have a weight in a range of 0.2-0.5 grams per cigarette (the proportion of the weight of raw material filled in the smoke-producing section in each cigarette), and the rigidity of the base rod of the smoke-producing section is in a range of 65%-95%.

Preferably, the smoke-producing section of the cigarette has a volume of 500 mm³, a weight of 0.27 grams per cigarette, and a rigidity of 80%. The filling for the smoke-producing section is relatively moderate.

Preferably, the smoke-producing section of the cigarette has a volume of 400 mm³, a weight of 0.26 grams per cigarette, and a rigidity of 85%. The filling for the smoke-producing section is relatively moderate.

Preferably, the smoke-producing section of the cigarette has a volume of 600 mm³, a weight of 0.30 grams per cigarette, and a rigidity of 85%. The filling for the smoke-producing section is moderate.

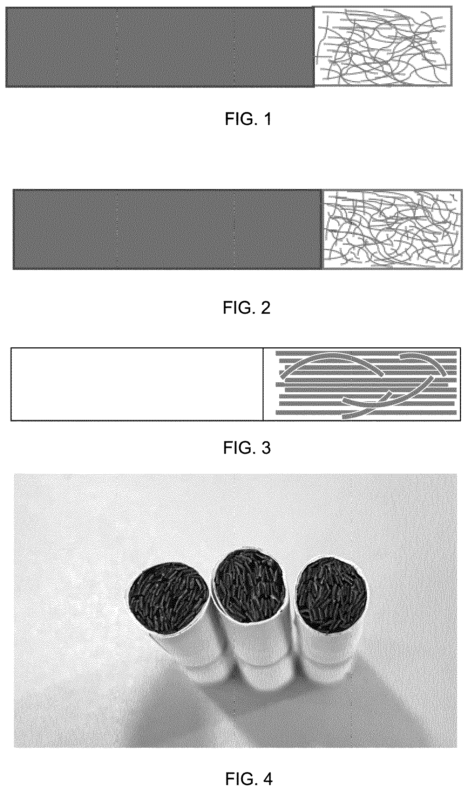

Comparative Example 1: a tobacco combination is selected to be composed by a set of dry-process reconstituted tobacco. The raw material characteristics of the set of dry-process reconstituted tobacco are not strictly specified. The reconstituted tobacco are produced according to the normal process. They are sliced and shredded according to the requirements for the conventional cigarettes, and then rolled by a cigarette making machine. The rolling state is shown in Figure 1 (the schematic view is only used to show the arrangement of raw materials inside the smoke-producing section, but does not limit the volume and specifications). The characteristics of the dry-process reconstituted tobacco are listed as follows:

**Table 1 Raw Material Analysis**

| | | | | | |
|---|---|---|---|---|---|
| Composition of raw material | Shredding condition | Stiffness | Moisture content | Filing degree | Results |
| dry-process reconstituted tobacco | mixed shreds of varying lengths, with both long and short shreds | \ | 11% | a smoke-producing section volume of 500 mm³, a weight of 0.25 grams per cigarette, and a rigidity of about 85%. | the arrangement on the end face is slightly disordered, the internal arrangement is jumbled, and it is substantially. unordered. |

Comparative Example 2: a tobacco combination is selected to comprise dry-process reconstituted tobacco and tobacco shreds. Specifically, the tobacco combination consists of 50% dry-process reconstituted tobacco and 50% tobacco shreds. The characteristics of the individual raw materials are not strictly specified. The reconstituted tobacco are produced according to the normal process. The reconstituted tobacco and the tobacco shreds are sliced and shredded according to the requirements for the conventional cigarettes, and then rolled by a cigarette making machine. The rolling state is shown in Figure 2 (the schematic view is only used to show the arrangement of raw materials inside the smoke-producing section, but does not limit the volume and specifications). The characteristics of the dry-process reconstituted tobacco are listed as follows:

**Table 2 Raw Material Analysis**

| Raw material | Shredding condition | Stiffness | Moisture content | Filing degree | Results |
|---|---|---|---|---|---|
| dry-process reconstituted tobacco | mixed shreds of varying lengths, with both long and short shreds | \ | 11% | a smoke-producing section volume of 540 mm³, a weight of 0.25 grams per cigarette, and a rigidity of about 80%. | the arrangement on the end face is quite disordered. The inner arrangement is |
| tobacco shreds | \ | \ | 10% | | irregular, and the debris tends to fall. |

Comparative Example 3: a tobacco combination is selected to comprise high-consistency pulping process reconstituted tobacco. The characteristics of the raw materials are not strictly specified. The high-consistency pulping process reconstituted tobacco is produced according to the normal process. The reconstituted tobacco and tobacco are sliced and shredded according to the requirements for the conventional cigarettes, and then rolled by a cigarette making machine. The rolling state is shown in Figure 1. The characteristics of the high-consistency pulping process reconstituted tobacco are listed as follows:

**Table 3 Raw Material Analysis**

| Raw material | Shredding condition | Stiffness | Moisture content | Filing degree | Results |
|---|---|---|---|---|---|
| high-consisten cy pulping process reconstituted tobacco | mixed shreds of varying lengths, with both long and short shreds. | \ | 9% | a smoke-produci ng section volume of 500 mm³, a weight of 0.29 grams per cigarette, and a rigidity of about 80%. | the arrangement on the end face is relatively disordered, and the internal arrangement is irregular. |

Comparative Example 4: a tobacco combination is selected to comprise high-consistency pulping process reconstituted tobacco and tobacco shreds. The characteristics of the individual raw materials are not strictly specified. The high-consistency pulping process reconstituted tobacco are produced according to the normal process. The high-consistency pulping process reconstituted tobacco and the tobacco shreds are sliced and shredded according to the requirements for the conventional cigarettes, and then rolled by a cigarette making machine. The rolling state is shown in Figure 2. The characteristics of the high-consistency pulping process reconstituted tobacco are listed as follows:

**Table 4 Raw Material Analysis**

| Raw material | Shredding condition | Stiffne ss | Moisture content | Filing degree | Results |
|---|---|---|---|---|---|
| high-consistenc y pulping process reconstituted tobacco | mixed shreds of varying lengths, with both long and short shreds | \ | 8% | a smoke-producing section volume of 500 mm³, a weight of 0.27 grams per cigarette, and a rigidity of about 80%. | The arrangement on the end face is quite disordered. The internal arrangement is irregular, and the debris tends to fall. |
| tobacco shreds | | | 10% | | |

Embodiment 1: a tobacco combination is selected to be composed by a set of dry-process reconstituted tobacco, which are employed in Comparative Example 1. By improving the process or adjusting other auxiliary additive material, the dry-process reconstituted tobacco was prepared in such a way that the dry-process reconstituted tobacco has a stiffness of 0.60mN*M or more and an anti-bending force of 10mN or more. It also requires that dry-process reconstituted tobacco is cut into shreds with a width of 1mm and a length of 20mm. The moisture content after shredding and mixing is controlled to be 8%. After processing, the dry-process reconstituted tobacco is rolled by a cigarette making machine in such a way that the filling degree of the smoke-producing section of the cigarette is controlled to allow that the dry-process reconstituted tobacco in the smoke-producing section, having a volume of 500mm³, of the cigarette, has a weight of 0.25grams per cigarette and the rigidity of the smoke-producing section is about 85%. The arrangement on the end faces of the produced cigarettes is neat, the internal arrangement is relatively regular, and the ordering ratio is substantially 75%.

Embodiment 2: a tobacco combination is selected to comprise dry-process reconstituted tobacco and tobacco shreds, which are employed in Comparative Example 2. Specifically, the tobacco combination consists of 50% dry-process reconstituted tobacco and 50% tobacco shreds. In the case that the formula of the tobacco combination is unchanged, by improving the process or adjusting other auxiliary additive material, the dry-process reconstituted tobacco is prepared in such a way that the dry-process reconstituted tobacco has a stiffness of 0.60mN*M or more and an anti-bending force of 1010mN or more. It also requires that the dry-process reconstituted tobacco is cut into shreds with a width of 1mm and a length of 20mm. After the dry-process reconstituted tobacco is shredded and mixed with the tobacco shreds, the moisture content of the dry-process reconstituted tobacco and the tobacco shreds is controlled to be 8%. After processing, the dry-process reconstituted tobacco and the tobacco shreds are rolled by the cigarette making machine in such a way that the filling degree of the smoke-producing section of the cigarette is controlled to allow that the dry-process reconstituted tobacco and the tobacco shreds in the smoke-producing section, having a volume of 540mm³, of the cigarette, have a weight of 0.25grams per cigarette and the rigidity of the smoke-producing section is about 80%. The arrangement on the end faces of the produced cigarette is neat, but the debris tends to fall. Furthermore, the internal arrangement is relatively regular, and some broken tobacco strands are interspersed in the longitudinal arrangements placed in the middle part of the cigarette. The ordering ratio is substantially 40%.

Embodiment 3: a tobacco combination is selected to comprise high-consistency pulping process reconstituted tobacco, which is employed in Comparative Example 3. By improving the process or adjusting other auxiliary additive material, the high-consistency pulping process reconstituted tobacco are prepared in such a way that the high-consistency pulping process reconstituted tobacco has a stiffness of 0.80mN*M or more and an anti-bending force of 15mN or more. It also requires that high-consistency pulping process reconstituted tobacco is cut into shreds with a width of 1.5mm and a length of 15mm. The moisture content after shredding and mixing is controlled to be 7.5%. After processing, the high-consistency pulping process reconstituted tobacco is rolled by a cigarette making machine in such a way that the filling degree of the smoke-producing section of the cigarette is controlled to allow that the high-consistency pulping process reconstituted tobacco in the smoke-producing section, having a volume of 500mm³, of the cigarette, has a weight of 0.29grams per cigarette and the rigidity of the smoke-producing section is about 80%. The arrangement on the end faces of the produced cigarette is neat, the internal arrangement is relatively regular, and the ordering ratio is substantially 85%.

Embodiment 4: a tobacco combination is selected to comprise high-consistency pulping process reconstituted tobacco, which is employed in Comparative Example 3. By improving the process or adjusting other auxiliary additive material, the high-consistency pulping process reconstituted tobacco is prepared in such a way that the high-consistency pulping process reconstituted tobacco has a stiffness of 0.80mN*M or more and an anti-bending force of 15mN or more. It also requires that high-consistency pulping process reconstituted tobacco is cut into shreds with a width of 1mm and a length of 15mm. The moisture content after shredding and mixing is controlled to be 7%. After processing, the high-consistency pulping process reconstituted tobacco is rolled by a cigarette making machine in such a way that the filling degree of the smoke-producing section of the cigarette is controlled to allow that the high-consistency pulping process reconstituted tobacco in the smoke-producing section, having a volume of 500mm³, of the cigarette, has a weight of 0.29grams per cigarette and the rigidity of the smoke-producing section is about 80%. The arrangement on the end face of the cigarette is neat, the internal arrangement is relatively regular, and the ordering ratio is substantially 90%.

Embodiment 5: a tobacco combination is selected to comprise high-consistency pulping process reconstituted tobacco and tobacco shreds, which are employed in Comparative Example 4. Specifically, the tobacco combination consists of 70% high-consistency pulping process reconstituted tobacco and 30% tobacco shreds. In the case that the formula of the tobacco combination is unchanged, by improving the process or adjusting other auxiliary additive material, the high-consistency pulping process reconstituted tobacco is prepared in such a way that the high-consistency pulping process reconstituted tobacco has a stiffness of 0.80mN*M or more and an anti-bending force of 20mN or more. It also requires that the high-consistency pulping process reconstituted tobacco is cut into shreds with a width of 1.5mm and a length of 15mm. After the high-consistency pulping process reconstituted tobacco is shredded and mixed with the tobacco shreds, the moisture content of the high-consistency pulping process reconstituted tobacco and the tobacco shreds is controlled to be 7.5%. After processing, the high-consistency pulping process reconstituted tobacco and the tobacco shreds are rolled by the cigarette making machine in such a way that the filling degree of the smoke-producing section of the cigarette is controlled to allow that the high-consistency pulping process reconstituted tobacco and the tobacco shreds in the smoke-producing section, having a volume of 500mm³, of the cigarette, have a weight of 0.27grams per cigarette and the rigidity of the smoke-producing section is about 80%. The arrangement on the end faces of the produced cigarette is neat, and almost none debris is dropped from the cigarette. Furthermore, the internal arrangement is relatively regular, and some expanded cut stems are irregularly provided in the longitudinal arrangements placed in the middle part of the cigarette and contain broken filaments. The ordering ratio is substantially 75%.

As shown in the above comparative examples, conventional cigarette production methods are mainly used, and there are no special requirements for the raw materials of tobacco combination. As shown in Examples 1 to 5, the cigarette is mainly produced by the approach of the present invention, and the obtained samples exhibit a relatively high degree of orderliness.

The above are only preferred embodiments of the present invention and are not intended to limit the present invention. Any modifications, equivalent substitutions and improvements that fall within the spirit and principles of the present invention shall be covered in the protection scope of the present invention.

## Claims

1. A method for ordering disordered tobacco shreds of heated cigarettes, which is **characterized by** comprising:
step 100: determining the composition of a tobacco combination for disordered tobacco shreds;
step 200: cutting the tobacco combination for disordered tobacco shreds to preset dimensions; and
step 300: rolling the obtained tobacco combination for disordered tobacco shreds to form a base rod of a smoke-producing section.

2. The method for ordering disordered tobacco shreds of heated cigarettes according to claim 1, **characterized in that** there further comprised between the step 200 and the step 300 is a step 202: controlling a moisture content of the tobacco combination for disordered tobacco shreds within a preset range.

3. The method for ordering disordered tobacco shreds of heated cigarettes according to claim 1 or 2, **characterized in that** there further comprised between the step 200 and the step 300 is a step 204: controlling the stiffness and the anti-bending force for the tobacco combination for disordered tobacco shreds within preset ranges respectively.

4. The method for ordering disordered tobacco shreds of heated cigarettes according to claim 1, **characterized in that** the tobacco combination for disordered tobacco shreds comprises reconstituted tobacco or a combination of reconstituted tobacco and tobacco raw material.

5. The method for ordering disordered tobacco shreds of heated cigarettes according to claim 1, **characterized in that** the tobacco raw material comprises, but is not limited to, tobacco shreds, cut stems, expanded tobacco shreds, and expanded cut stems.

6. The method for ordering disordered tobacco shreds of heated cigarettes according to claim 1, **characterized in that** the reconstituted tobacco comprises, but is not limited to, dry-process reconstituted tobacco, papermaking-process reconstituted tobacco, high-consistency pulping process reconstituted tobacco, and roll-pressed process reconstituted tobacco.

7. The method for ordering disordered tobacco shreds of heated cigarettes according to claim 1, **characterized in that** the step of cutting the tobacco combination for disordered tobacco shreds to preset dimensions comprises: cutting the reconstituted tobacco to have a width ranging from 0.5 to 3 millimeters and a length ranging from 5 to 30 millimeters.

8. The method for ordering disordered tobacco shreds of heated cigarettes according to claim 2, **characterized in that** the step of controlling the moisture content of the tobacco combination for disordered tobacco shreds within a preset range comprises: drying the reconstituted tobacco in such a way that the reconstituted tobacco has a moisture content of 9.0% or less, and the tobacco raw material has a moisture content of 12% or less.

9. The method for ordering disordered tobacco shreds of heated cigarettes according to claim 3, **characterized in that** the step of controlling the stiffness and the anti-bending force for the tobacco combination for disordered tobacco shreds within preset ranges comprises: controlling the stiffness of the reconstituted tobacco to 0.5mN*m or more and controlling the anti-bending force to 8.0mN or more.

10. The method for ordering disordered tobacco shreds of heated cigarettes according to claim 1, **characterized in that** the step of rolling the obtained tobacco combination for disordered tobacco shreds to form a base rod of a smoke-producing section, wherein: the desired filling degree of the base rod of the smoke-producing section in the rolling process is determined by the weight of the tobacco combination for disordered tobacco shreds filled in the smoke-producing sections at different volumes of the cigarette and the rigidity of the base rod of the smoke-producing section, wherein the internal volume of the smoke-producing sections of the cigarette is in a range of 300 to 1000mm³, the weight of the tobacco combination for disordered tobacco shreds filled in the smoke-producing sections having such internal volume is in a range of 0.2 to 0.5 grams per cigarette, and the rigidity of the base rod of the smoke-producing section is in a range of 65% to 95%; and wherein both the weight and the rigidity are adjusted by an auxiliary control system of a cigarette making machine.
